**Europäisches Patentamt**

**European Patent Office**

**Office européen des brevets**

(19)

(11) Veröffentlichungsnummer: **0 200 961**
**A2**

(12) # EUROPÄISCHE PATENTANMELDUNG

(21) Anmeldenummer: **86105161.3**

(22) Anmeldetag: **15.04.86**

(51) Int. Cl.⁴: **G01F 11/20**

(30) Priorität: **17.04.85 DE 3513804**

(43) Veröffentlichungstag der Anmeldung:
**17.12.86 Patentblatt 86/46**

(84) Benannte Vertragsstaaten:
**AT BE CH DE FR GB IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Grüninger, Gunter, Dipl.-Chem.**
**Landstrasse 98**
**D-6905 Schriesheim(DE)**

(74) Vertreter: **Zellentin, Wiger et al**
**Patentanwälte Dr. rer. nat. Rüdiger Zellentin**
**Dipl.-Ing. Wiger Zellentin Rubensstrasse 30**
**D-6700 Ludwigshafen(DE)**

(54) **Vorrichtung und Verfahren zum Dosieren von fliessfähigen Materialien.**

(57) Die vorliegende Erfindung betrifft eine Vorrichtung zum Dosieren von fließfähigen Materialien, bestehend aus einem Gehäuse mit Zu-und Ableitungen und einem darin angeordneten Absperrorgan, wobei das Absperrorgan in dem Gehäuse drehbar, im wesentlichen flüssigkeitsdicht gelagert ist und einen Kanal aufweist, der durch Drehung des Absperrorgans an die Zu-und Ableitungen anschließbar ist.

Als wesentlich wird dabei angesehen, daß im Inneren des Absperrorgans mittig ein durch den Druck des fließfähigen Materials hin-und herbewegbares, formveränderliches Trennelement in Form eines umstülpbaren Strumpfes oder einer elastischen Membran angeordnet ist, mit deren Hilfe im Kanal befindliches Material stromab verdrängbar ist, wobei die von fließfähigen, zu dosierenden Material abgekehrte Seite des Trennelements entweder mit dem Druck des fließfähigen Materials oder einem Arbeitsfluid beaufschlagbar ist.

Fig 1

## Vorrichtung und Verfahren zum Dosieren von fließfähigen Materialien

Die vorliegende Erfindung betrifft eine Vorrichtung und ein Verfahren zum Dosieren von fließfähigen Materialien.

Bekannte Dosiervorrichtungen weisen den Nachteil auf, daß mit ihrer Hilfe eine Mengensteuerung nur schwer und relativ ungenau möglich ist. Die Automatisierung von Dosierungen kann daher nicht in gewünschtem Maße vorgenommen werden.

So ist z.B. die Steuerung über den Durchfluß nur indirekt und zudem abhängig von der Genauigkeit des verwendeten Meßsystems.

Als Dosiervorrichtungen kommen dabei insbesondere in der chemischen Verfahrenstechnik gewöhnliche Pumpen mit Laufzeitsteuerung, Kolbenhubpumpen mit Hubsteuerung, Frequenzsteuerung und/oder Laufzeitsteuerung, und für Feststoffe Schnecken mit Drehgeschwindigkeitssteuerung zur Anwendung.

An Ventilsteuerungen sind lediglich Magnetventile mit Auf/Zu-Zeittaktern und Magnetventile in Kombination mit manuell eingestellten Durchflußreglern bekannt, s.z.B. Chemie Technik 13, 72-143 (Heft 9/84).

Das automatische Öffnen und Schließen erfogt immer zwischen zwei vorgegebenen Grenzpositionen der Stellglieder; die Feinregulierung über proportionale Zwischenpositionen. Besonders bei - schwankenden Druckverhältnissen besteht kein linearer Zusammenhang zwischen irgendeinem Ventilparameter, wie Hub oder Schwenkwinkel, und der Durchflußmenge. Der Einsatz solcher Ventile für Dosierzwecke ist im Fall der Stetigregelung nur über Soll/Istwert-Abgleich möglich; im Fall der Auf/Zu-Regelung zusätzlich über Zeittaktgeber oder Grenzvolumens-Endschalter.

Demgegenüber hat sich die vorliegende Erfindung die Entwicklung einer einfachen Dosiervorrichtung als Aufgabe gestellt, die unabhängig von der Antriebstrechnik (Preßluftdruck, Flüssigkeitsdruck, Elektrogetriebe), unabhängig von der Oberflächenspannung der zu bemessenden Lösung/Flüssigkeit, unabhängig von Schaumbildung, weitgehend unabhängig von der Viskosität der Lösung/Flüssigkeit und ohne Saugeffekt an der Versorgungsleitung den linear oder funktionell zeitabhängigen Durchfluß einer genauen Volumenmenge ermöglicht. Die Dosiervorrichtung soll sich u.a. eignen zur Automatisierung und fehlerfreien Versorgung von Färbe-, Bleich-und Appreturanlagen, -maschinen und -vorrichtungen in der Textilveredelung, sowie in chemischen Produktionsanlagen, Laborgeräten, der Wassertechnik etc.

Aus der französichen Patentanmeldung F 24 76 306 ist eine Dosiervorrichtung mit rotierbarem Absperrorgan und darin angeordnetem Kanal bekannt.

Im Kanal ist ein hin-und herbeweglicher Kolben angeordnet, der wechselweise mit zu dosierender Flüssigkeit beaufschlagbar ist.

Ein fester, starrer Kolben hat jedoch Nachteile, die u.a. darin begründet sind, daß schon feinste Teilchen, die zwischen den Kolbenrand und die kanalwandung gelangen zum Verklemmen und zum Ausfall oder auch zu Dosierungenauigkeiten führen, falls der Kolben nicht in seine Endstellung bewegt werden kann. Insbesondere bei aus Kunststoff gefertigten Ventilen ist diese Gefahr erheblich, da Fremdkörper leicht in das Material eindringen können.

Die Lösung dieser Aufgabe gelingt mit einer Vorrichtung zum Dosieren von fließfähigen Materialien, bestehend aus einem Gehäuse mit Zu-und Ableitungen und einem darin angeordnetem Absperrorgan, wobei das Absperrorgan in dem Gehäuse drehbar, im wesentlichen flüssigkeitsdicht gelagert ist und einen Kanal aufweist, der durch Drehung des Absperrorgans an die Zu-und Ableitungen anschließbar ist, so daß in dessen Innerem mittig ein durch den Druck des fließfähigen Materials hin-und herbewegbares, formveränderliches Trennelement in Form eines umstülpbaren Strumpfes oder einer elastischen Membran angeordnet ist, mit deren Hilfe im Kanal befindliches Material stromab verdrängbar ist, wobei die vomfließfähigen zu dosierenden Material abgekehrte Seite des Kolbens entweder mit dem Druck des fließfähigen Materials oder einem Arbeitsfluid beaufschlagbar ist.

Als Steuergröße einer derartigen Vorrichtung dienen die Drehgeschwindigkeit und die Zahl der Umdrehungen des Absperrorgans selbst.

Dabei wird der Fülldruck oder der Druck einer Hilfsflüssigkeit des Arbeitsmediums dazu benutzt, die im Kanal gespeicherte, in dem Strumpf oder der Ausstülpung der Membran liegende zu dosierende Materialmenge in die Ableitung auszustoßen, während der Rückraum hinter dem Trennelement erneut befüllt wird.

Das Absperrorgan wird nach dem Ausstoß gedreht, wodurch sich das Trennelement erneut der Zuleitung zuwendet und der Vorgang wiederholt werden kann.

Die Konstanz der somit erfolgenden portionsweisen Abgabe des zu dosierenden Materials ist bei vorgebenem Druck in der Zuleitung abhängig von der Konstanz der Rotationsgeschwindigkeit des Absperrorgans.

Diese mechanische Steuergröße ist problemlos zu überwachen. Gleichzeitig erlaubt die Regelung über die Rotationsgeschwindigkeit des Absperrorgans.

Diese mechanische Steuergröße ist problemlos zu überwachen. Gleichzeitig erlaubt die Regelung über die Rotationsgeschwindigkeit jedoch eine zuverlässige Vorhersage über die pro Zeiteinheit abgegebene Menge an zu dosierendem Material, da das Kanalvolumen konstant bleibt.

Dabei ist zu beachten, daß bei Verwendung einer gummielastischen Membran diese nach Befüllen unter Dehnungsspannung steht, was einerseits den Ausstoßvorgang erleichtert, andererseits aber bedingt, daß der Fülldruck ausreichend hoch gewählt wird.

In jedem Falle ist als Vorteil derartiger Trennelemente festzuhalten, daß ein Verklemmen ausgeschlossen ist und daß auch bei langanhaltendem Gebrauch eine sichere Trennung der dadurch unterteilten Kanalräume gewährleistet ist.

Der Kanalquerschnitt kann in beliebiger geometrischer Form gewählt werden, da das Trennelement, insbesondere bei Verwendung eines nicht elastischen Strumpfes im ausgestülpten Zustand nicht an den Kanalwänden flüssigkeitsdicht anliegen, sondern in diesen lediglich gehalten sein muß; vorgezogen wird jedoch ein Kreisquerschnitt.

Das Absperrorgan wird abgedichtet vom Gehäuse umgeben, es muß daher ein Rotationskörper sein, wobei zylindrische und kugelförmige Gestalt wegen der einfacheren Herstellung vorgezogen wird.

Die vorliegende Erfindung ist hinsichtlich der Anzahl der Kanäle im Rotationskörper nicht beschränkt. Diese können nach Art einer Revolvertrommel angeordnet und achsparallel ausgerichtet sein.

Sie können auch in einem Zylinder übereinander verlaufend durch eine Drehachse angeordnet sein, wobei natürlich jedem Kanal eigene Zu-und Abführleitungen zuzuordnen sind. Bei der Ausführung nach Art einer Revolvertrommel ist jeder Kanal durch Rotation mit jeder gewünschten Stelle seines Radius in Deckung zu bringen, weswegen grundsätzlich ein Leitungsanschluß ausreicht.

Bei dieser Anordnung sind jedoch jeder Seite der Trommel mehrere Anschlüsse zuteilbar, wobei einseitig kurzgeshlossene separate Leitungen die jeweiligen Ein-und Ausgänge miteinander kinematisch verbinden, falls als Arbeitsdruck der des zu dosierenden oder auch der zu dosierenden Materialien (beispielsweise Flüssigkeiten und fließfähige Festsubstanzen mit Hilfe einer Vorrichtung gleichzeitig) eingesetzt werden soll.

Diese Ausführungsform erlaubt aber auch die Verwendung eines Arbeitsfluids, z.B. falls der Druck des zu dosierenden Materials eingangsseitig zu nahe an dem des zu beaufschlagenden Mediums oder gar darunter liegt. Voraussetzung für das Funktionieren der erfindungsgemäßen Vorrichtung ist selbstverständlich ein ausreichender Differenzdruck, der aber auch mit Hilfe des Arbeitsfluids zur Gewährleistung eines ausreichend schnellen Ausstoßes hergestellt werden kann.

Die Trommel weist dabei auf der einen Seite die Zu-und Abführleitungen auf und gegenüberliegend ebenso getrennte Leitungen für Zufuhr und Ableitung der Arbeitsflüssigkeit.

Das Befüllen der Kanäle kann somit gegen niedrigen Druck geschehen, wohingegen der Ausstoß mit dem des Arbeitsfluids, also auch gegebenenfalls erheblich höher vorgenommen werden kann.

Die vorliegende Erfindung ist hinsichtlich des Arbeitsfluids nicht auf Flüssigkeiten beschränkt, es können grundsätzlich auch Gase oder andere fließfähige Stoffe eingesetzt werden wenn dies erforderlich sein sollte.

Eine weitere Variante bei revolvertrommelartiger Anordnung besteht darin, an mehreren Stellen das Material aus einer Leitung gemeinsam zuzuführen und auf den gegenüberliegenden Seiten in eine gemeinsame Ableitung auszustoßen. Dies bedingt einen jeweils beidseitigen Anschluß von Zu-und Ableitungen.

Eine weitere Variante besteht darin, die Kanäle in einer Ebene rechtwinkelig zueinander anzuordnen, wobei zentral ein die Strömungszweige abdichtendes, gegenüber der rotierbaren Trommel starres Leitelement anzuordnen ist.

Die Vorrichtung weist dann vier vorzugsweise rechtwinkelig zueinanderliegende Zu-und Ableitungen auf, wobei auch ein Arbeitsfluid eingesezt werden kann.

Die Arbeitsweise der Vorrichtung ist dabei die, daß zu dosierendes Material in den Kanal unter Verdrängung des Trennelementes eingegeben wird. Das Absperrorgan wird dann solange gedreht, bis der gefüllte Kanal in den Bereich der Ableitung gelangt. Die Rückseite des Trennelementes gerät gleichzeitig in den Einfluß zuströmenden Arbeitsfluids oder neuen zu dosierenden Materials. Da der Druck in der Ableitung unter dem der Zuleitung liegt, verdrängt nachströmendes Material das Trennelement zu seiner gegenüberliegenden Endstellung und stößt das Material aus.

Da somit beide Seiten der Membran oder des Strumpfes eine Arbeitsfläche darstellen, erfolgt nach einer Drehung um je 180° ein neuer Dosiervorgang. Die Menge des ausgestoßenen Materials pro Zeiteinheit hängt damit in gewissen Druckdifferenzbereichen nunmehr lediglich von der Rotationsgeschwindigkeit des Absperrorgans ab, sodaß sehr genaue Aussagen über abgegebene Volumina gemacht werden können.

Die Vorrichtungen gemäß der vorliegenden Erfindung eigenen sich daher in besonderem Maße für den Einsatz in automatisierten, Rechner-gesteuerten Anlagen.Es kann ggf. von Vorteil sein, die Trennelemente hinsichtlich ihrer Längsbewegung im Kanal zu begrenzen. Dazu kann eine Verengung des Kanals oder des Gehäuses dienen. Zusätzlich kann das Trennelement einen starren Bodeneinsatz aufweisen, der sich gegen die Verjüngung oder gleichwirkende Anschläge legt. Hierdurch können Verfälschungen der Dosierung durch Druckstöße aufgefangen werden, bzw. Trennelement in die Zu- und Ableitungen gestülpt wird und die Drehbarkeit des Absperrorgans beeinträchtigt. Bei Anordnung mehrerer Trennelemente in einem Absperrorgan kannes von Vorteil sein, anstelle formveränderlicher Trennelement an sich bekannte Kolben zu verwenden.

Die Vorrichtungen gemäß vorliegender Erfindung lassen sich vereinfacht als Rotationspulsatoren bezeichnen.

Da sie in der Bauweise kleingehalten werden können und an die Stellmotoren außer ihrer Regelbarkeit keine hohen Anforderungen gestellt werden müssen, können die Rotationspulsatoren vorzugsweise direkt neben der Verbrauchsstation angeordnet werden.

Im beigefügten Fließschema ist ein beispielsweise zentrales Dosiersystem unter Anwendung der erfindungsgemäßen Vorrichtungen dargestellt, wobei zu unterstreichen ist, daß ein derartiges Zentralsystem einen ganz entscheidenden Vorteil der vorliegenden Erfindung darstellt.

Den Lösungsbehältern A, B und C sind Zentralversorgungsleitungen A', B' und C' zugeordnet, einem beispielsweisen Farbstoffansatz E eine Leitung E' und einer Lösung D die Leitungen D' und D''.

Die Objekte 1 bis 4 werden direkt aus den Rotationspulsatoren R versorgt. Dabei entsteht in 1 Zielprodukt wie auch z.B. durch Umsetzung von 2 mit D, 3 und 4.

Die Zentralversorgungsleitungen können dabei analog zu den üblichen Wasser-und Dampfversorgungen oder Kondensatentsorgungen verlegt sein.

Die Rotationspulsatoren sind direkt an den Objekten montiert, sie sind regelbar sowohl über Objekt-Einzelsteuerung als auch über Objekt-Gruppensteuerungen und im einfachsten Fall über einen Stromkreis mit integriertem Frequenzregler und Zeittakter, wobei der Frequenzregler über eine Einteilung mit Durchflußvolumen je Minute verfügt.

Die Vorteile eines solchen Systems liegen auf der Hand:

-kurze Transportwege (zum Teil werden Vorratsgefäße vom Lieferanten bestückt)

-Vormischen entfällt (Fehlbestandteile durch Nachlässigkeiten sind ausgeschlossen)

-einfach integrierbar in Programmsteuerungen verschiedener Art

-Aufstauungen konzentrierter Chemikalien in Seitenleitungen entfallen

-ausführbar in verschiedenen Automatisierungsstufen (Hand bis Vollautomatik)

-neue Prozeßführungsmöglichkeiten werden ermöglicht (kürzere Zeiten, mehr Sicherheit)

-einfachere Bedienung und Wartung im Vergleich zu Dosierpumpen

-keine Verfälschung bei Flüssigkeiten mit geringer Oberflächenspannung, da nirgendwo angesaugt wird. Der Flüssigkeitsdurchtritt erfolgt über einen negativen Drucksprung $p_1 > p_2$ und nicht wie bei Pumpen über einen positiven Drucksprung $p_1 < p_2$, welcher gegebenenfalls für Kavitation verantwortlich ist.

Die vorliegende Erfindung wird anhand der beiliegenden 1 -8 unter Verwendung von Prinzipzeichnungen näher erläutert.

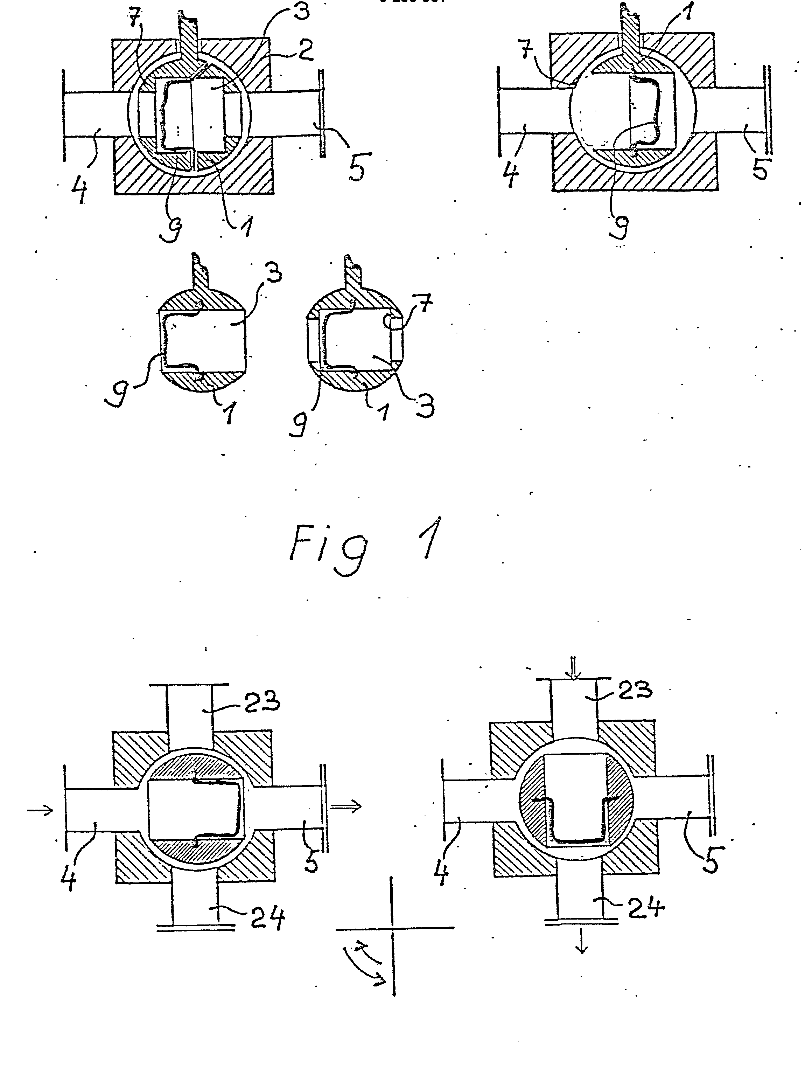

Fig. 1 zeigt das Gehäuse 2 des Rotationspulsators, der im einfachsten Falle das Absperrorgan 1 mit nur einem Kanal 3 umschließt, im Kanal 3 ist der Kolben 9 frei beweglich gelagert und durch die Anschläge 6 und 7 gesichert. Mit den Ziffern 4 und 5 sind die Zu-und Ableitungen bezeichnet. Sämtliche Teile können aus Kunststoff gefertigt sein.

Das Absperrorgan liegt dabei gleitend an den Wandungen des Gehäuses und somit abgedichtet an.

Das Trennelement 9 ist mittig im Absperrorgan 2 gehalten und besteht entweder aus einem elastischen aber nicht unter Arbeitsbedingungen dehnbaren Strumpf aus z.B. Kunststoff mit Gewebeeinlage oder einer gummielastischen Membran, wobei jeweils ein starres Bodenelement eingearbeitet sein kann, das gegen geeignete Anschläge stößt.

Die Anschläge können dabei auch durch die Gehäusewandung gebildet sein, wobei die Durchmesser der Zu-und Ableitungen 4, 5 dann kleiner sein müssen als der Durchmesser des Kanals 3.

Es ist ohne weiteres möglich, mit einer Vorrichtung z.B. zwei verschiedene Flüssigkeiten zu dosieren, wenn das Gehäuse zwei zusätzliche Zu-und Ableitungen 23 und 24 aufweist. Hierbei wird das Absperrorgan 1 nicht in eine umlaufende Rotation versetzt, sondern jeweils um 90° hin-und hergeschwenkt.

Das Trennelement 9 ist dabei im belasteten Zustand gezeigt. In den nachfolgenden Figuren ist diese teils belastet, teils unbelastet dargestellt.

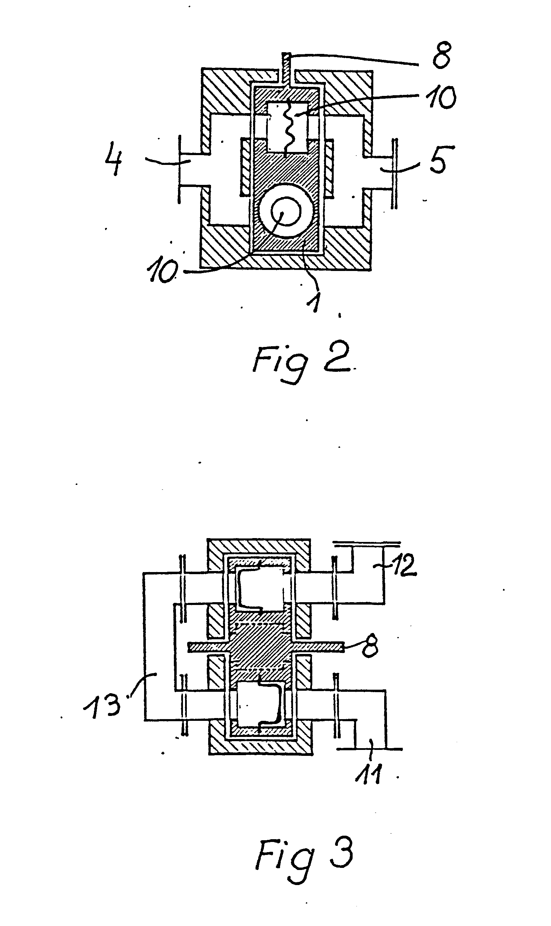

Fig. 2 zeigt eine Ausführung, bei der zwei Kanäle übereinander im Absperrorgan 1 rechtwinkelig zueinander angeordnet sind. Dabei sind die Zuleitung 4 und die Ableitung 5 beiden Kanälen zugeordnet.

Dieserart ist der als unterer dargestellte Kanal sowohl von der Zu-als auch von der Ableitung abgesperrt, wohingegen der obere in Arbeitsstellung steht.

Fig. 3 zeigt eine Ausführung, bei der die Kanäle revolvertrommelartig parallel zur Rotationsachse 8 im Absperrorgan 1 angeordnet sind. Die Leitung 11 wirkt dabei über den jeweils fluchtenden Kanal mit der Leitung 13 zusammen, die mit der Leitung 12 kurzschließt um derart den Stofftransport mit Hilfe des in der Leitung 13 befindlichen Arbeitsfluids zu bewirken. Dieses wird dabei lediglich hin-und herbewegt.

Das trommelartig ausgebildete Absperrorgan 1 kann jedoch auch Kanäle 3 aufweisen, die senkrecht zur Rotationsachse verlaufen, dazu ist jedoch die Anordnung eines mittleren Leitelementes 20 erforderlich.

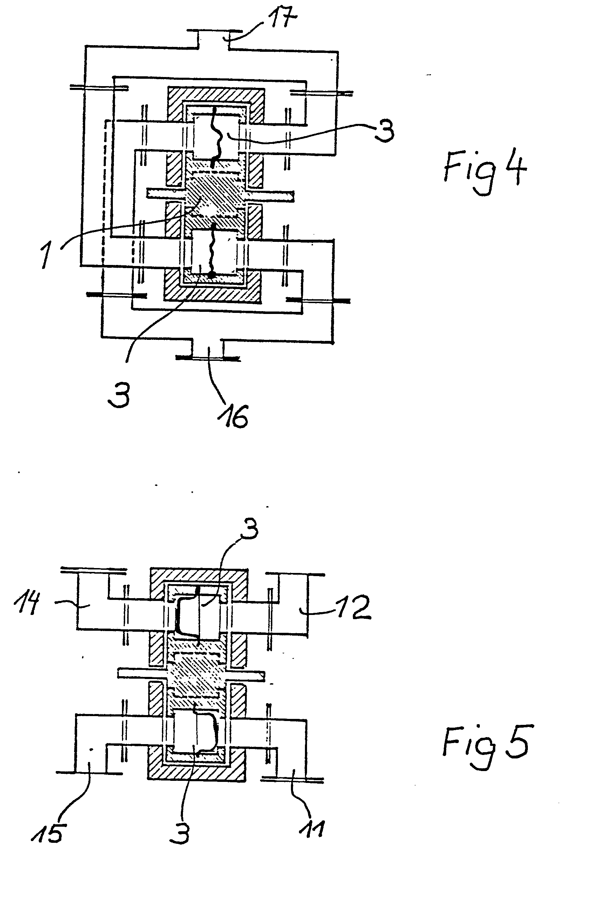

Fig. 4 zeigt eine Variante, bei der die Zu-und Ableitungen 16, 17 je beidseitig an das trommelartig ausgebildete Absperrorgan 1 angeschlossen sind und in gemeinsame Stutzen münden. Dieserart erfolgt das Befüllen und der Ausstoß an zu dosierenden Material aus zwei Kanälen 3 gleichzeitig.

Fig. 5 zeigt die erfindungsgemäße Vorrichtung in einer Anordnung mit Zu-und Ableitungen 14, 15 für ein Arbeitsfluid, bei dem in der Ableitung ein geringerer Druck herrschen kann, als in der Zuleitung.

Das beispielsweise über die Leitung 11 in den Kanal 3 geführte Material verdrängt den Kolben gegen den geringeren Druck der Leitung 15, wohingegen der Ausstoß in die Leitung 12 mit dem höheren Druck der Leitung 14 erfolgen kann.

Dam gelingt es, den Druck des zu dosierenden Materials auf gewünschte Werte zu steigern, wohingegen der Zustrom gegen Atmosphärendruck erfolgen kann.

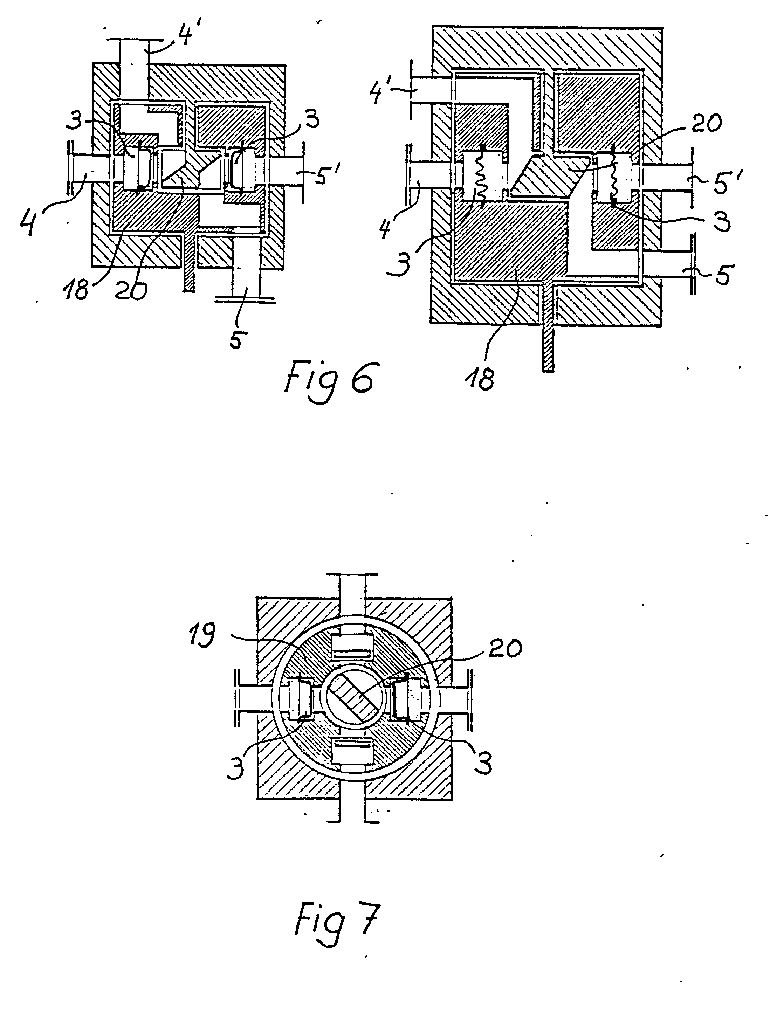

Fig. 6,7 Die Figuren 6 und 7 zeigen Ausführungen, bei denen die Absperrorgane als rotierbare Trommeln 18, 19 ausgebildet sind, bei denen die Kanäle durch die Rotationsachse veralufen. In ihrem Schnittbereich sind gegenüber den Trommeln 18, 19 starre Leitelemente 20 angeordnet, die gegen die gegenüberliegenden Kanäle abdichten.

Der Abstrom erfolgt hierbei im rechten Winkel zum Zustrom, wobei die Kanäle einmal in der Ebene der Rotationsachse der Trommel 18 (Fig. 6) und einmal senkrecht dazu liegen (Fig. 7).

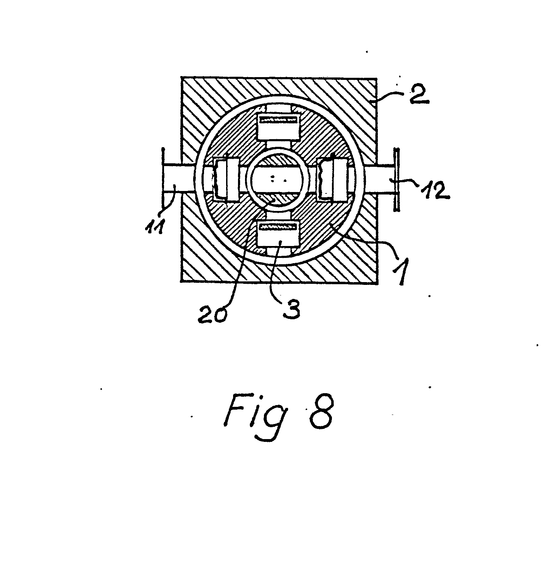

Fig.8 zeigt einen prinzipiell ähnlichen Rotationspulsator wie in den Figuren 6 und 7 dargestellt, das Leitelement 20 läßt hier jedoch nur einen Ausstoß des Materials in Zustromrichtung zu.

Die von Materialzustrom abgekehrte Seite der Trennelemente 9 wirkt hierbei mit im Innenraum 21 der Trommel 19 befindlichem Arbeitsfluid nach Art einer hydraulichen Flüssigkeit zusammen. Dabei ist, wie in Figur 7, ein Trennelementenpaar 9 in Form eines umstülpbaren Strumpfes ausgeführt, ein Paar als starre Kolben 25.

**Ansprüche**

1.) Vorrichtung zum Dosieren von fließfähigen Materialien, bestehend aus einem Gehäuse mit Zu- und Ableitungen und einem darin angeordnetem Absperrorgan, wobei das Absperrorgan (1) in dem Gehäuse (2) drehbar, im wesentlichen flüssigkeitsdicht gelagert ist und einen Kanal (3) aufweist, der durch Drehung des Absperrorgans (1) an die Zu-und Ableitungen (4; 5) anschließbar ist, dadurch gekennzeichnet, daß in dessen Innerem mittig ein durch den Druck des fließfähigen Materials hin-und herbewegbares, formveränderliches Trennelement (9) in Form eines umstülpbaren Strumpfes oder einer elastischen Membran (9) angeordnet ist, mit deren Hilfe im Kanal (3) befindliches Material stromab verdrängbar ist, wobei die vom fließfähigen, zu dosierenden Material abgekehrte Seite des Trennelements entweder mit dem Druck des fließfähigen Materials oder einem Arbeitsfluid beaufschlagbar ist.

2.) Vorrichtung nach Anspruch 1, dadurch gekennzeichnet, daß das Absperrorgan (1) zur Befestigung des Trennelementes (9) geteilt ausgebildet ist.

3.) Vorrichtung nach Anspruch 1 bis 2, dadurch gekennzeichnet, daß das Absperrorgan (2) mehrere, symmetrisch zu seiner Rotationsachse verteilte Kanäle (3) aufweist, wobei die Kanäle auch senkrecht zu dieser und durch sie verlaufend (10;11) angeordnet sein können.

4.) Dosiervorrichtung nach Anspruch 1 bis 2, dadurch gekennzeichnet, daß die Kanäle (3) nach Art einer Revolvertrommel angeordnet sind.

5.) Vorrichtung nach Anspruch 4, dadurch gekennzeichnet, daß auf der einen Seite des Gehäuses Zu-und Ableitungen (11; 12) und auf der gegenüberliegenden Seite eine diese verbindende Arbeitsleitung (13) angeordnet sind.

6.) Vorrichtung nach Anspruch 4, dadurch gekennzeichnet, daß zur Führung von Arbeitsfluid eine geteilte Arbeitsleitung (14; 15) mit einem Zustromteil (14') und einen Abstromteil (15') vorgesehen ist, die miteinander indirekt über die Kanäle (3) verbindbar sind und an die die Dosierleitungen (11; 12) angeschlossen sind.

7.) Vorrichtung nach Anspruch 4, dadurch gekennzeichnet, daß die Zuleitung (11) und die Ableitung (12) beidseitig an das Gehäuse (2) angeschlossen sind und je einen gemeinsamen Zu-(16) und Ablauf (17) besitzen.

8.) Vorrichtung nach Anspruch 1 bis 3, dadurch gekennzeichnet, daß die Leitungen (4, 4'; 5, 5') und die Kanäle in einer Ebene liegend, in einer Trommel (18; 19) im rechten Winkel zueinander angeordnet sind und vom gegenüberliegenden Strömungszweig durch ein gegenüber der rotierbaren Trommel (18; 19) starres Leitelement (20) abgetrennt sind.

9.) Vorrichtung nach anspruch 1 bis 8, dadurch gekennzeichnet, daß das Absperrorgan Formbegrenzungen (6, 7) für das formveränderliche Trennelement in Form von Anschlägen aufweist, die vom Absperrorgan oder der Gehäusewandung gebildet sein können.

10.) Vorrichtung nach Anspruch 1 bis 9, dadurch gekennzeichnet, daß das formveränderliche Trennorgan (9) einen starren Bodenbereich aufweist.

11.) Vorrichtung nach Anspruch 4 bis 9, dadurch gekennzeichnet, daß anstelle des formveränderlichen Trennorgans ein verschieblicher Kolben im Kanal (3) angeordnet ist.

12.) Vorrichtung nach Anspruch 1 bis 12, dadurch gekennzeichnet, daß sie über Objekt-Einzel-oder Gruppensteuerungen direkt an zu versorgenden Objekten montiert sind und mit einem Frequenzregler und Zeittakter sowie ggf. einem zentralen Rechner verbunden sind.

13.) Verfahren zum Dosieren von fließfähigen Materialien, dadurch gekennzeichnet, daß man unter Druck das Material in einen ein formveränderliches Trennorgan aufweisenden Kanal einfüllt, das Trennorgan dabei bis zu einer Endstellung verdrängt, den Kanal mitsamt seinem Inhalt von der Einfüllöffnung durch Rotation weg zu einer Austrittsöffnung dreht und mit Hilfe nachströmenden Materials oder einem Arbeitsfluid durch Druck auf die vom auszubringenden Material abgekehrte Seite des Trennorgans das Material austreibt, wobei der Druck und/oder die Rotationsgeschwindigkeit derart bemessen sind, daß das Befüllen und Entleeren vollständig geschieht, wonach der Kanal in eine Ausgangstellung zurück bewegt wird.

14.) Verfahren nach Anspruch 12, dadurch gekennzeichnet, daß die dosierte Menge mit Hilfe der Zahl der Umdrehungen des Absperrorgans bestimmt wird.

Fig 1

Fig 2

Fig 3

Fig 4

Fig 5

Fig 6

Fig 7

Fig 8